# EUROPEAN PATENT APPLICATION

(11) **EP 1 739 358 A1**
(43) Date of publication of application: **03.01.2007**
(21) Application number: 05734621.5
(22) Date of filing: 20.04.2005
(51) Int. Cl.: F24C 1/00, F24C 7/02, F24C 15/32

(54) **COOKING APPARATUS**

(30) Priority: 22.04.2004 JP 2004126483
(71) Applicant: MATSUSHITA ELECTRIC INDUSTRIAL CO., LTD., Kadoma-shi, Osaka 571-8501 (JP)
(72) Inventor: ZOUGOU, Kayoko c/o IP Development Center, Chuo-ku, Osaka-shi, Osaka 540-6319 (JP); ITOU, Kiyonori IP Development Center, Chuo-ku, Osak-shi, Osaka 540-6319 (JP); INADA, Ikuhiro IP Development Center, Chuo-ku, Osaka-shi, Osaka 540-6319 (JP)
(74) Representative: Grünecker, Kinkeldey, Stockmair & Schwanhäusser Anwaltssozietät
(86) International application number: PCT/JP2005/007519
(87) International publication number: WO 2005/103570

(57) **Abstract**

It is an object of the invention to provide a cooking apparatus which can keep a food warm at a proper temperature without damaging the food.

The interior of a heating chamber 12 is heated by heating chamber interior heating means 13 and steam is supplied into the heating chamber 12 by steam supply means 18. At the then time, since a control part 19, based on the temperature of the interior of the heating chamber detected by heating chamber temperature detect means 20, controls the heating chamber interior heating means 13 and steam supply means 18 in such a manner that the interior of the heating chamber 12 provides a given temperature, a food 11 can be maintained at a heat retention temperature suitable for keeping the food warm. This can solve the problem found in the conventional cooking apparatus that the surface of the food dries and burns.

## Description

### <Technical Field>

The present invention relates to a cooking apparatus and, specifically, the invention relates to a cooking apparatus which can keep a food warm at an optimum temperature.

### <Background Art>

Conventionally, there is known a cooking apparatus which has a heat retaining function to keep a cooked food warm within a heating chamber (for example, see the patent reference 1).

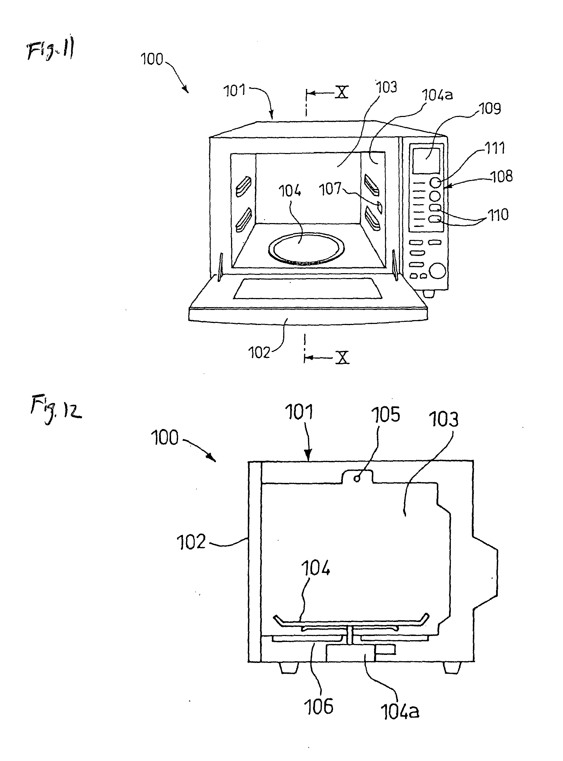

As shown in Figs. 11 and 12, according to the conventional cooking apparatus 100, in a main body 101, there is formed a rectangular-box-shaped heating chamber 103 the front opening portion of which can be opened and shut by a door 102. On the bottom portion of the heating chamber 103, there is provided a rotary motor 104a; and, on the rotary motor 104a, there is removably mounted a rotation dish 104 which can be rotated with a food placed thereon. By the way, there is further disposed a weight sensor (not shown) which measures the weight of the food placed on the rotation dish 104.

In the cooking apparatus 100, in addition to a magnetron (not shown) serving as microwave heating means, on the ceiling portion of the heating chamber 103, as heating means, there is provided an upper heater 105 such as a lamp heater; and, on the bottom wall portion of the heating chamber 103, there is provided a lower heater 106 composed of, for example, a plane heater. Also, on the side wall 103a of the heating chamber 103, there is provided a temperature sensor 107 which is used to measure the temperature of the interior of the heating chamber 103. By the way, at the side of the door 102 disposed on the front surface of the main body 101, there is provided a control part 108. And, the control part 108 includes an operation panel 111 on which there are provided a display part 109, operation buttons 110 and the like.
[Patent Reference 1]: JP2000-213749 (Fig. 3)

### <Disclosure of the Invention>

By the way, for example, when keeping a food warm just after cooked within the heating chamber 103 for a father who is absent in the cooking time, the heating chamber 103 is used as a heat retaining place while using the upper heater 105 and lower heater 106 respectively provided on the heating chamber 103. For this purpose, the temperature of the interior of the heating chamber 103 using the temperature sensor 107 and, based on the measured temperature of the interior of the heating chamber 103, the control part 108 controls the upper and lower heaters 105 and 106 to thereby maintain the temperature of the interior of the heating chamber at a given temperature.

However, although the temperature of the food can be kept warm at a given temperature by controlling the upper and lower heaters 105 and 106 to maintain the interior of the heating chamber 103 at a given temperature, there is found an inconvenience that the specific portion of the food dries and burns.

The present invention is made in view of the above-mentioned problem. And thus, it is an object of the invention to provide a cooking apparatus which can keep a food warm at a proper temperature while preventing the food against damage.

In attaining the above object, according to the invention, there is provided a cooking apparatus which can supply steam to a heating chamber with an object to be heated stored therein. Specifically, the present cooking apparatus comprises: heating chamber interior heating means for heating the interior of the heating chamber; steam supply means for supplying steam into the heating chamber; heating chamber temperature detect means for detecting the temperature of the interior of the heating chamber; and, control part for controlling the heating chamber interior temperature detect means and the steam supply means, wherein the control part, based on the temperature detected by the heating chamber temperature detect means, controls the heating chamber interior heating means and the steam supply means to thereby be able to maintain the heating chamber interior temperature at a given heat retaining temperature suitable for keeping the object to be heated warm.

In the thus structured cooking apparatus, not only the interior of the heating chamber is heated by the heating chamber interior heating means but also steam is supplied into the heating chamber by the steam supply means. At the then time, the control part, based on the temperature of the interior of the heating chamber detected by the heating chamber temperature detect means, controls the heating chamber interior heating means and steam supply means such that the interior of the heating chamber provides a given temperature and, therefore, the object to be heated can be maintained at a temperature suitable to keep it warm. This can solve the problem found in the conventional cooking apparatus that the surface of the object to be heated dries and burns.

By the way, preferably, after the interior of the heating chamber is heated up to a temperature of 65°C or higher by the heating chamber interior heating means, the steam may be supplied and the object to be heated may be kept warm.

According to this structure, not only the temperature of the interior of the heating chamber can be raised up to a temperature of 65°C or higher in a short time to set the interior of the heating chamber at a temperature suitable for keeping the object to be heated warm, but also the temperature of the object to be heated can be set at a temperature of 50°C or higher to thereby restrain bacteria against multiplication; and, after then, the steam can be supplied to thereby prevent the object to be heated from drying and, at the same time, the object to be heated can be kept warm at the temperature of 65°C or higher.

Since microorganisms in the object to be heated generally multiply at a temperature of about 40°C (specifically, in the range of 20 - 50°C), it is not proper that the object to be heated remains left at a room temperature. On the other hand, partly because it is believed that the microorganisms do not multiply at the temperature of 65°C or higher and partly because the temperature of 65°C is suitable for a man to eat a food while feeling it comfortably warm, the interior of the heating chamber may be preferably maintained at the temperature of 65°C.

Also, according to the structure of the invention, while measuring the temperature of the interior of the heating chamber or the temperature of the object to be heated using a temperature sensor, the control part controls the heating chamber interior heating means and steam supply means to thereby keep the object to be heated warm.

Thanks to this structure, while measuring the temperature of the interior of the heating chamber or the temperature of the object to be heated using a temperature sensor, the heating chamber interior heating means and steam supply means can be controlled. Therefore, the temperatures and humidity of the heating chamber and the object to be heated can be kept properly.

Also, according to the invention, there is provided a structure in which, up to a given time, the control is carried out while giving priority to the state of the obj ect to be heated and, after the passage of the given time, the control is carried out while giving priority to the time for keeping the object to be heated warm.

According to this structure, up to the given time (for example, for 30 minutes), while giving priority to the temperature and humidity of the obj ect to be heated, the heating chamber interior heating means and steam supply means are controlled. And, after passage of the given time, the heating chamber interior heating means and steam supply means are controlled to adjust the amount of supply of water for steam so that the heat retaining time can be extended while keeping the temperature of 65°C, or, these means are controlled from the viewpoint of saving energy.

Also, according to the invention, there is employed a structure which, after passage of a given time, information is given using informing means.

According to this structure, the informing means inform a user of various kinds of information about the passage of a given time and other abnormal conditions such as a fact that the water for steam is running short.

### <Brief Description of the Drawings>

Fig. 1 is a front view of an ordinary microwave oven having a steam function which is an embodiment of a cooking apparatus according to the invention.
Fig. 2 is a side view of the microwave oven shown in Fig. 1.
Fig. 3 is a perspective view of a modification of a structure for evaporating water in an evaporation dish.
Fig. 4 is a block diagram of the structure of a control part and a control system.
Figs. 5A and 5B are respectively graphical representations of the contents to be controlled by the control part.
Fig. 6 is a flow chart of the control contents to be executed in Fig. 5A.
Fig. 7 is a flow chart of the control contents to be executed in Fig. 5B.
Fig. 8 is a time chart of an example of a steam heat retaining control based on time.
Fig. 9 is a table to show heat retaining states with respect to respective heating sources.
Fig. 10 is a view of temperatures and time suitable for multiplication of bacteria.
Fig. 11 is a perspective view of a conventional cooking apparatus.
Fig. 12 is a section view taken along the line X - X shown in Fig. 11.

### <Description of Reference Numerals>

- 10:: Microwave oven (Cooking apparatus)
- 11:: Food (Object to be heated)
- 12:: Heating chamber
- 13:: Heater (Heating chamber interior heating means)
- 17:: Evaporation dish (Steam supply means)
- 18:: Storage part heating part (Steam supply means)
- 19:: Control part
- 20:: First thermistor (Heating chamber temperature detect means; Temperature sensor)
- 25:: Convection heater (Heating chamber interior heating means)
- 26:: Fan (Heating chamber interior heating means)
- 27:: Infrared sensor (Temperature sensor)
- 33:: Buzzer (Informing means)

### <Best Mode for Carrying Out the Invention>

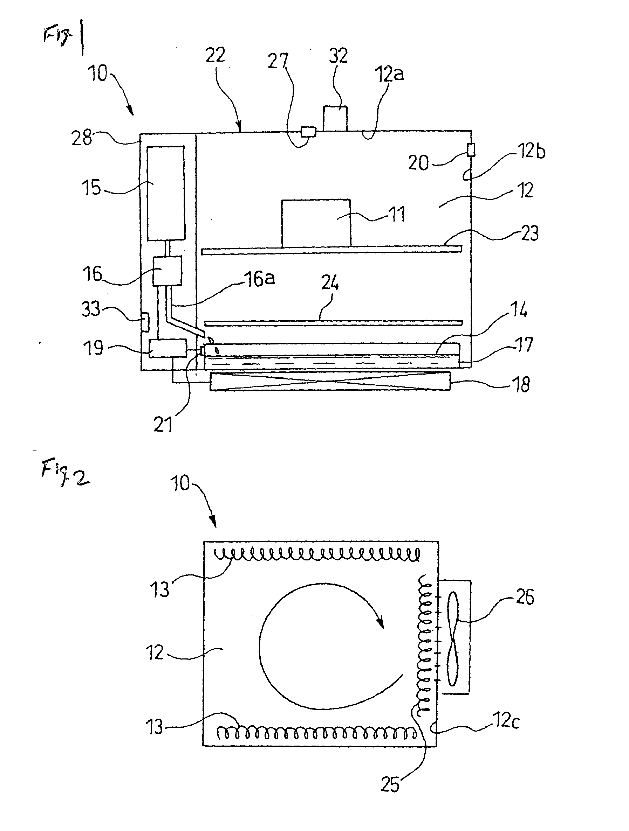

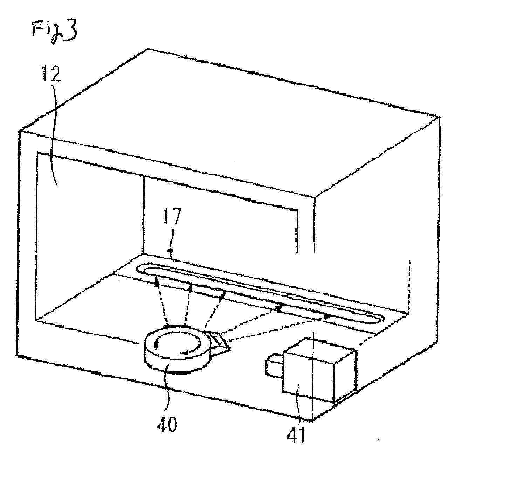

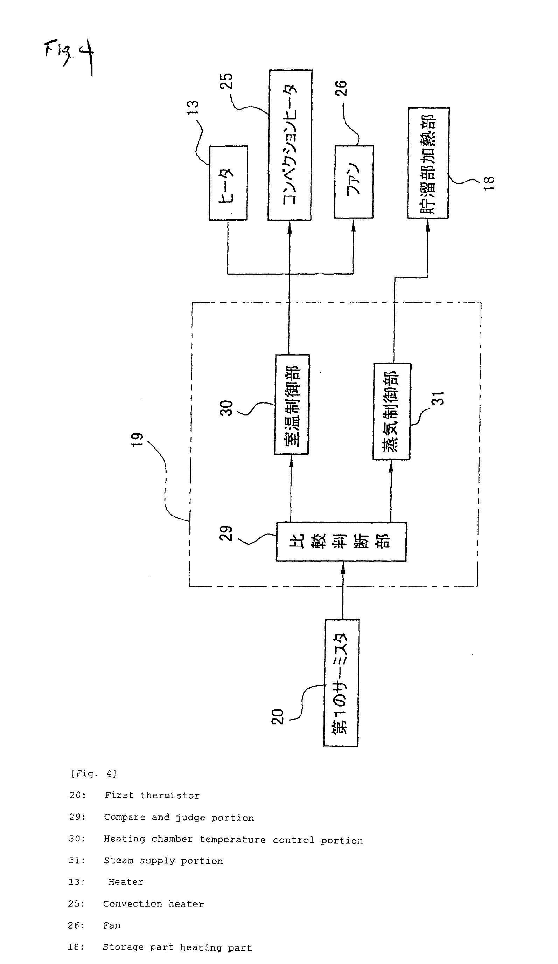

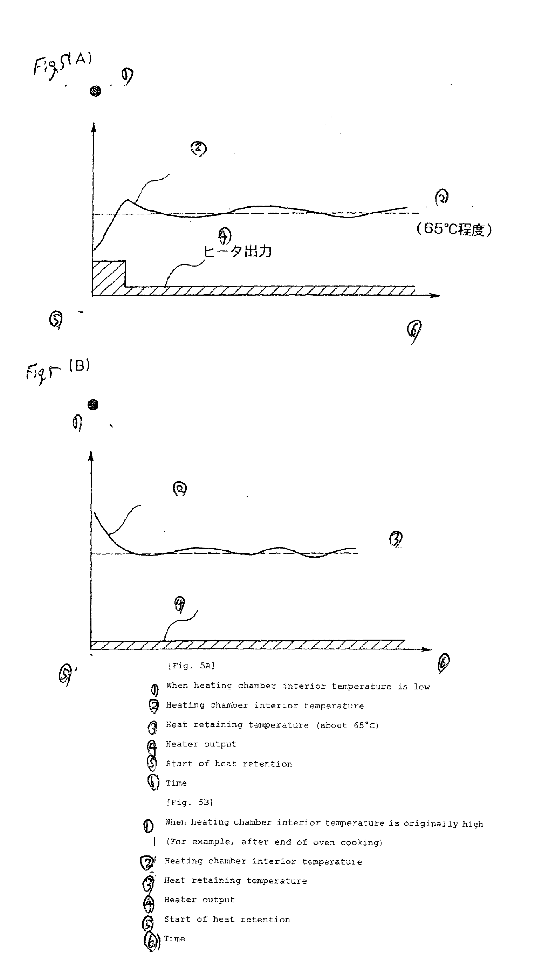

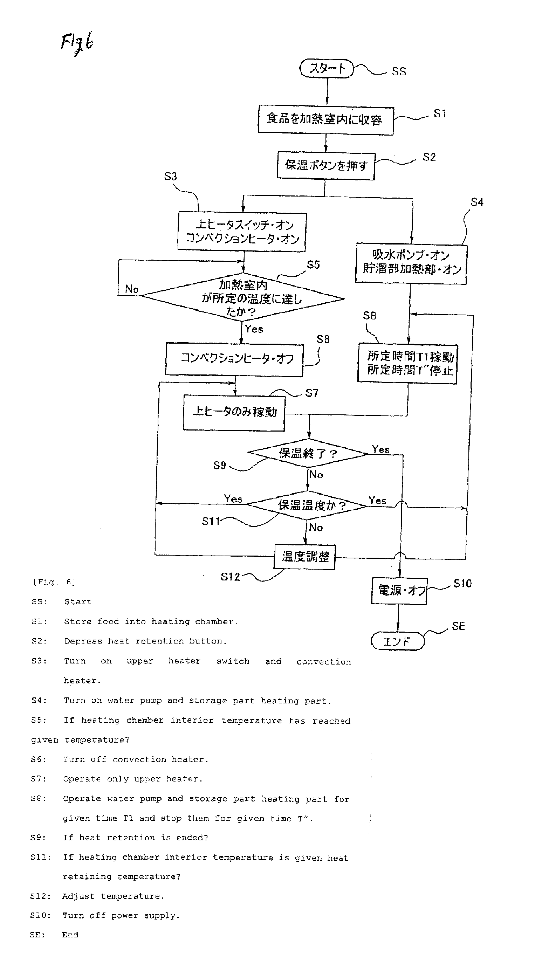

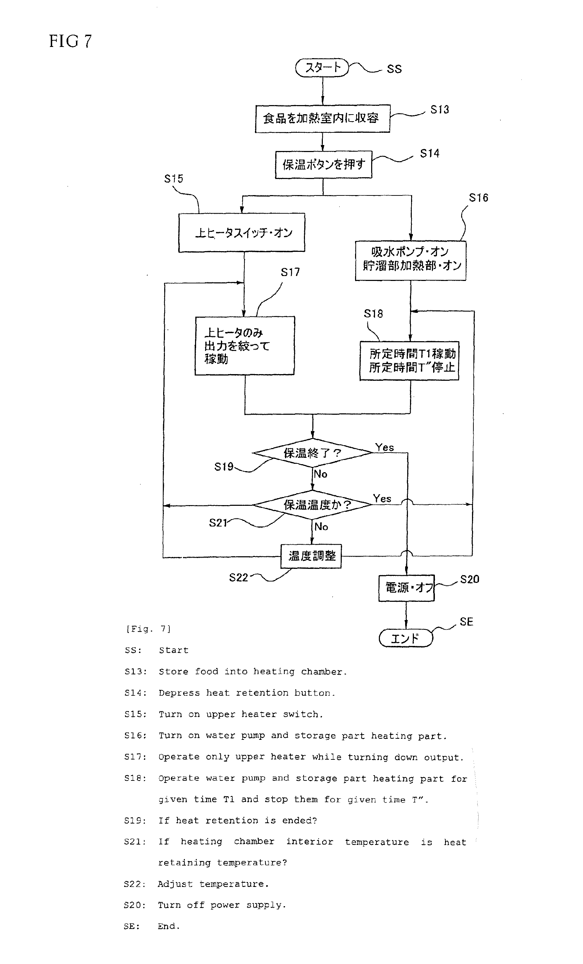

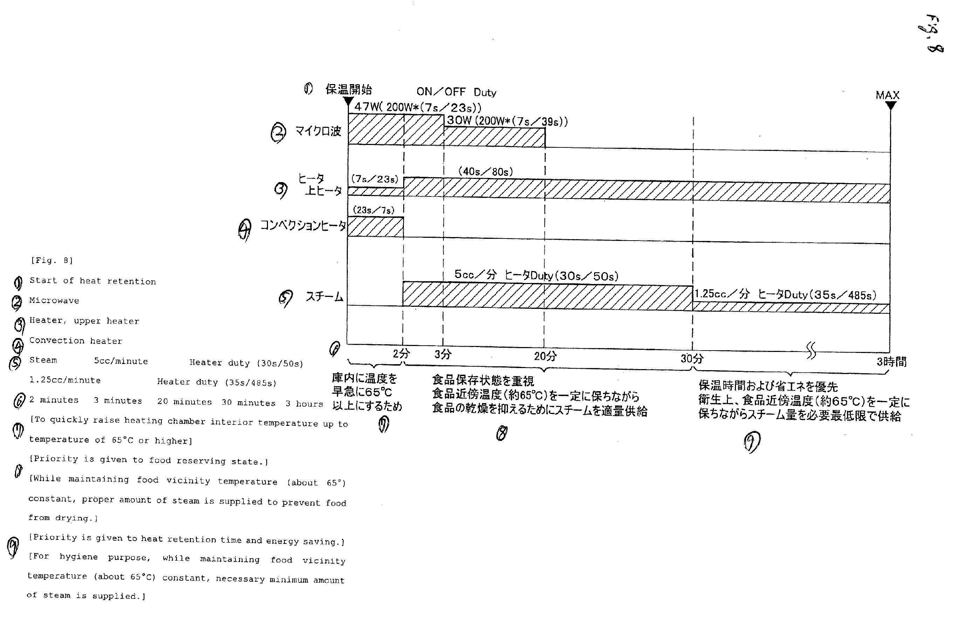

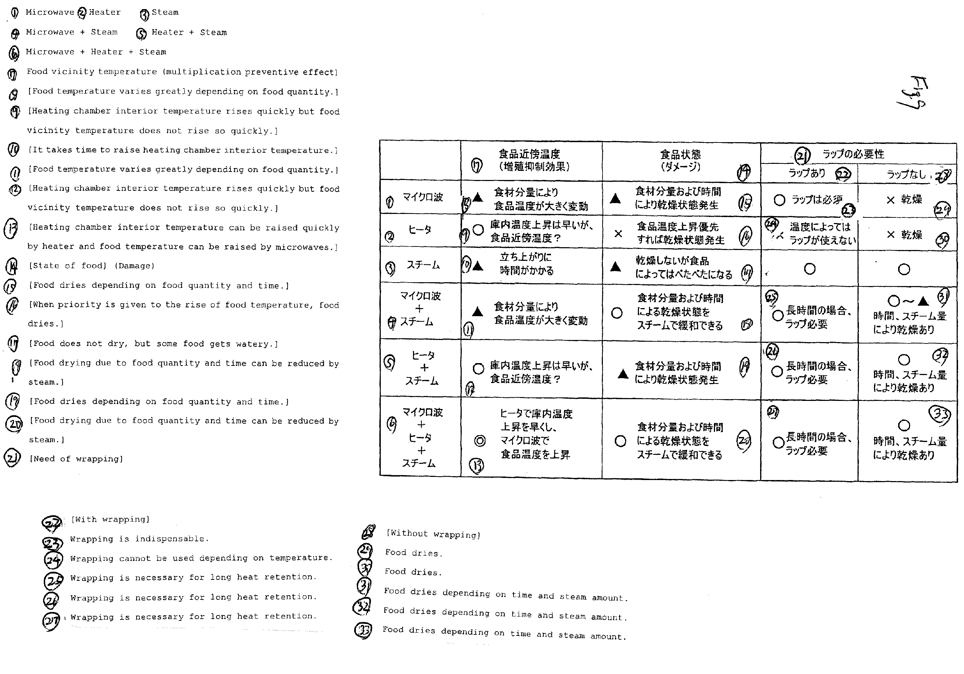

Now, description will be given below in detail of an embodiment of a cooking apparatus according to the invention with reference to the accompanying drawings. Fig. 1 is a structural front view of an ordinary microwave oven having a steam function which is an embodiment of a cooking apparatus according to the invention; Fig. 2 is a structural side view of the microwave oven shown in Fig. 1; Fig. 3 is a perspective view of a modification of a structure for evaporating water in an evaporation dish; Fig. 4 is a block diagram of the structure of a control part and a control system; Figs. 5A and 5B are respectively graphical representations of the contents to be controlled by the control part; Fig. 6 is a flow chart of the control contents to be executed in Fig. 5A; Fig. 7 is a flow chart of the control contents to be executed in Fig. 5B; Fig. 8 is a time chart of an example of a steam heat retaining control based on time; and, Fig. 9 is a table to show heat retaining states with respect to respective heating sources.

This microwave oven 10 is a cooking apparatus which can supply steam into a heating chamber 12 with a food 11 stored therein. Specifically, the microwave oven 10 comprises: two heaters 13 serving as heating chamber interior heating means for heating the interior of the heating chamber 12; as steam supply means for supplying steam into the heating chamber 12, a storage part heating part 18 for heating not only an evaporation dish 17 serving as a storage part for storing water 14 within the heating chamber 12 but also water 14 in the evaporation dish 17; a first thermistor 20 serving as heating chamber temperature detect means for detecting the temperature of the interior of the heating chamber 12; and, a control part 19 for controlling the heaters 13 serving as the heating chamber interior heating means and the storage part heating part 18 serving as the steam supply means. Also, on the outer surface of the evaporation dish 17 serving as the storage part, there is provided a second thermistor 21 serving as storage part surface temperature detect means for detecting the surface temperature of the evaporation dish 17.

As shown in Figs. 1 and 2, the microwave oven 10 includes a main body 22 having, for example, a rectangular shape and also includes the heating chamber 12 in the interior thereof. On the front opening portion of the main body 22, there is disposed a door (not shown) in such a manner that the door can be opened and shut freely, whereby the heating chamber 12 can be closed air tight. On the upper wall 12a of the heating chamber 12, there is provided an infrared sensor 27, thereby being able to measure the surface temperature of a food 11 which is an object to be heated within the heating chamber 12. Also, on the side wall 12b of the heating chamber 12, there is provided the first thermistor 20 for detecting the temperature of the interior of the heating chamber 12, whereby the temperature of the interior of the heating chamber 12 is always detected and is fed back to the control part 19.

The heaters 13, which serve as the heating chamber interior heating means, are respectively disposed in the upper and lower portions of the heating chamber 12; and, between the upper and lower heaters 13, there are interposed not only a shelf 23 for placing dough or the like which is an example of the food 11 thereon but also a cooking dish 24.

Also, on the back wall 12c of the heating chamber 12, there is provided a convection heater 25 serving as the heating chamber interior heating means and, in the rear of the convection heater 25, there is provided a fan 25 which functions as the heating chamber interior heating means.

Thanks to this structure, the heating chamber 12 can heat the food 11 not only using the upper and lower heaters 13, 13 but also by convecting a hot wind forcibly using the convection heater 25 and fan 26. Also, the fan 26 can also be used to diffuse the steam supplied into the heating chamber 12.

The evaporation dish 17 serving as the storage part for storing the water 14 within the heating chamber 12 is disposed in the lower portion of the heating chamber 12. This evaporation dish 17 is used to store a small amount of, for example, about 20 cc of water and the water is to be evaporated in a short time by the storage part heating part 18 which is disposed downwardly of the evaporation dish 17. The storage part heating part 18 is disposed in contact with the lower surface of the evaporation dish 17; and, the storage part heating part 18 heats the evaporation dish 17 through the main body made of aluminum die cast heated by a heating member such as a Nichrome wire, thereby preventing the water 14 from boiling locally.

The evaporation dish 17 is a long and narrow plate member made of stainless steel with a recessed portion formed therein and is disposed on the deep side bottom surface of the heating chamber 12 on the opposite side of the object-to-be-heated take-out mouth while the longitudinal direction of the evaporation dish 17 extends along the deep side wall surface of the heating chamber 12. As the storage part heating part 18, besides the above-mentioned structure, there may also be employed a structure in which the evaporation dish 17 is heated with radiant heat generated by a glass tube heater or a sheath heater; or, there may also be used a structure in which a plate heater or the like is bonded to the evaporation dish 17.

Also, for example, as shown in Fig. 3, the water in the evaporation dish 17 may be evaporated with high frequency waves generated from a magnetron 41. In this case, the water in the evaporation dish 17 may be high frequency heated while stirring steam generated using an ordinary stirrer blade 40. Preferably, the stirrer blade 40 may be designed such that the high frequency waves stirred by the stirrer blade 40 can be directed to the evaporation dish 17 to thereby be able to heat the evaporation dish 17 intensively. This can be realized by stopping the stirrer blade 40 at a specific position, while the stirrer blade 40 normally rotates in such a manner that the whole of the heating chamber 12 can be heated uniformly. For example, by enforcing a control that, after the water in the evaporation dish 17 is heated intensively for a given time, the heating operation is returned to the normal heating processing of the interior of the heating chamber 12, steam generation and high frequency heating can be carried out simultaneously with no provision of the evaporation dish heating heater.

In this manner, by heating and evaporating the water in the evaporation dish 17 with high frequency waves while omitting the evaporation dish heating heater, the structure can be simplified and thus the cost thereof can be reduced.

Referring back again to Figs. 1 and 2, in a chamber 28 disposed adjacent to the side surface of the heating chamber 12, there are stored a tank 15 and a water pump 16, whereby the water 14 stored in the tank can be supplied to the evaporation dish 17 within the heating chamber 12 by the water pump 16 through a pipe 16a. Therefore, the water to be supplied to the evaporation dish 17 is water before heated and thus, generally, the temperature of this water is lower than the temperature of the interior of the heating chamber 12.

As shown in Fig. 4, the control part 19 includes a compare and judge portion 29 for receiving a detect signal from the first thermistor 20 and comparing the detect signal with a reference temperature, a chamber temperature control portion 30 for receiving an instruction from the compare and judge portion 29 and controlling the heaters 13 or the like serving as the heating chamber interior heating means, a steam control portion 31 for controlling the storage part heating part 18 to adjust the amount of steam, and the like. By the way, there may also be provided a magnetron 32 and thus heating with microwaves is also possible. Also, for example, in the vicinity of the control part 19, there is disposed a buzzer 33 which serves as informing means, whereby, when a given time has passed, or when an abnormal condition has occurred, an alarm sound or the like can be issued.

As described above, the steam supply means is composed of the above-mentioned tank 15, water pump 16, control part 19 and storage part heating part 18, while the water stored in the tank 15 is supplied in a desired amount to the evaporation dish 17 through the pipe 16a according to cases. By the way, the tank 15 is buried in a compact manner in the side wall portion of the main body 22 that is relatively difficult to rise in temperature, in order that, when the tank 15 is incorporated into the cooking apparatus, the cooking apparatus itself can be prevented from increasing in size. This tank 15 is removably mounted on the main body 22 in such a manner that it can be pulled to the outside from the side surface side of the main body 22. By the way, the tank 15, besides the above structure, may also be adiabatically treated and disposed on the upper or lower surface side of the cooking apparatus.

Next, description will be given below of the contents to be controlled by the control part 19.

In the control part 19, the compare and judge portion 29 controls the heating chamber interior temperature control portion 30 and steam control portion 31 based on the temperature of the interior of the heating chamber or the temperature of a food detected by the first thermistor 20. In other words, the heating chamber interior temperature control portion 30, according to an instruction from the compare and judge portion 29, drives the upper and lower heaters 13, 13, convection heater 25, fan 26 and the like properly as the need arises to adjust the temperature of the interior of the heating chamber 12, thereby maintaining the temperature of the interior of the heating chamber 12 at a given heat retaining temperature suitable for keeping the food 11 warm. At the same time, the steam control portion 31, according to an instruction from the compare and judge portion 29, controls the storage part heating part 18 to adjust the amount of the steam.

Here, as a given heat retention temperature, for example, there can be employed a temperature of 65°C or higher. The reason for this is as follows: that is, since microorganisms in a food normally multiply at a temperature of 40°C or so (in the range of 20 - 50°C), it is not proper to leave the food at a room temperature but it is believed that the microorganisms do not multiply at a temperature of 65°C or higher; and, in order to eat a food while feeling it comfortably warm, a temperature of 65°C is suitable.

By the way, when keeping a food warm for a long time, in order to retard the reduction of the water in the tank 15, after passage of a given time from the start of the heat retention, the output of the storage part heating part 18 may be turned down, or there may also be employed a mode in which, while maintaining the heat retaining state by intermittently turning on and off such output, the water can be saved.

In the heating chamber interior temperature control portion 30, as shown in Fig. 5A, when the temperature of the interior of the heating chamber is low (basically, when starting the heat retention from the room temperature), the upper and lower heaters 13, 13, convection heater 25, fan 26 and the like are all operated to increase suddenly the temperature of the interior of the heating chamber 12 and, after then, the outputs of the respective heaters are turned down to thereby be able to provide a heat retaining state at a given temperature. Or, as shown in Fig. 5B, when the temperature of the interior of the heating chamber 12 is originally high (for example, after end of oven cooking), the outputs of the respective heaters can be turned down from the beginning to thereby lower the temperature of the interior of the heating chamber 12 down to a given heat retaining state.

Fig. 6 shows a flow of a control processing to be executed in a case shown in Fig. 5A.

When the control processing is started (Step SS), a food 11 is stored into the cooking dish 24 within the heating chamber 12 (Step S1) . When the door is shut and a heat retention button on an operation panel is depressed (Step S2), the upper heater 13 and convection heater 25 are turned on (Step S3) to heat the interior of the heating chamber 12 and, at the same time, the water pump 16 and storage part heating part 18 are turned on (Step S4).

When the first thermistor 20 detects the temperature of the interior of the heating chamber 12 and feeds it back to the control part 19, the compare and judge portion 29 judges whether the temperature of the interior of the heating chamber 12 has reached a given temperature or not (Step S5) ; and, when the temperature has not reached the given temperature, the interior of the heating chamber 12 is heated on using the upper heater 13 and convection heater 25. On the other hand, it is judged that the temperature has reached the given temperature, the heating chamber interior temperature control portion 30 turns off the convection heater 25 to prevent the food from drying (Step S6) and operates only the upper heater 13 (Step S7).

On the other hand, after the water pump 16 and storage part heating part 18 are turned on in Step S4, there is repeated a control processing in which the water pump 16 and storage part heating part 18 are operated for a given time T1 (for example, 1.5 seconds) and are then stopped for a given time T2 (for example, 80 seconds) (Step S8).

While continuing the operation of the upper heater 13 and the intermittent operations of the water pump 16 and storage part heating part 18 (Step S8), to end the heat retaining state (Step S9), the power supply may be turned off (Step S10), thereby ending the heat retaining state (Step SE). On the other hand, when continuing the retaining state further, it is checked based on the detected temperature from the first thermistor 20 whether the temperature of the interior of the heating chamber 12 is a given heat retaining temperature or not (Step S11) ; and, when the temperature is the heat retaining temperature, the then state is maintained. By the way, as the heat retaining temperature, preferably, there may be employed a temperature of 65°C or higher from the view point of food hygiene and there may be employed a temperature of 75°C or lower which is a temperature to prevent the food against damage.

On the other hand, when the temperature is not the heat retaining temperature, a temperature adjustment processing is executed (Step S12) . In the temperature adjustment processing, for example, when the temperature of the interior of the heating chamber 12 is too low, according to an instruction from the heating chamber interior temperature control portion 30, the output of the heater 13 may be increased to raise the temperature, or under the control of the steam control portion 31, the amount of steam to be supplied into the heating chamber 12 may be increased. Also, when the temperature of the interior of the heating chamber 12 is too high, the output of the heater 13 may be decreased, or the amount of steam to be supplied into the heating chamber 12 may be decreased. After the temperature is adjusted in this manner, the processing goes back to Step S7 and Step S8, where, until the end of the heat retaining state, the operation of the upper heater as well as the intermittent operations of the water pump 16 and storage part heating part 18 are executed on.

Next, while referring to Fig. 7, description will be given below of a case as shown in Fig. 5B where the outputs of the respective heaters are turned down from the beginning to gradually raise the temperature of the interior of the heating chamber to thereby provide a heat retaining state within the heating chamber.

As shown in Fig. 7, when the control processing is started (Step SS), the food 11 is stored into the cooking dish 24 within the heating chamber 12 (Step S13). The door is shut and a heat retention button on the operation panel is pressed down (Step S14). When the first thermistor 20 detects the temperature of the interior of the heating chamber 12 and feeds it back to the control part 19, the compare and judge portion 29 turns on a switch for the upper heater 13 serving as the heating chamber interior heating means (Step S15) and, at the same time, based on the temperature of the interior of the heating chamber 12, the output of the upper heater 13 is turned down properly to heat the interior of the heating chamber 12 so that the temperature of the interior of the heating chamber 12 can reach a desired heat retaining temperature; and, the water pump 16 and storage part heating part 18 are turned on (Step S16).

Only the upper heater 13 is operated while the output thereof is turned down (Step S17) to heat the heat chamber 12 and, at the same time, there is repeatedly executed a control processing (Step S18) in which the water pump 16 and storage part heating part 18 are operated for a given time (for example, 1. 5 seconds) and are then stopped for a given time (for example, 80 seconds).

While continuing the operation of the upper heater 13 (Step S7) and the intermittent operations of the water pump 16 and storage part heating part 18 (Step S8), to end the heat retaining state (Step S19), the power supply may be turned off (Step S20), thereby ending the heat retention state (Step SE) . On the other hand, when continuing the retaining state further, it is checked whether the temperature of the interior of the heating chamber 12 is a given heat retaining temperature or not (Step S21) ; and, when the temperature is the heat retention temperature, the then state is maintained. By the way, as the heat retaining temperature, as described above, preferably, there may be employed a temperature which is 65°C or higher but is 75°C or lower.

On the other hand, when it is judged that the temperature is not the heat retention temperature, a temperature adjustment processing is executed (Step S22). In the temperature adjustment processing, there can be executed a similar control processing to the above-mentioned processing in the case of Fig. 5A. And, the processing goes back to the step S17 and step S18, where, until the end of the heat retaining state, there are executed on the control of the output of the heater 13 and the intermittent control of the water pump 16 and storage part heating part 18.

Therefore, since the control part judges the temperature of the interior of the heating chamber and, according to the temperature, carries out the controls shown in Figs. 5A and 5B, a proper heat retaining control can be attained.

Next, description will be given below of an example of a steam heat retaining control according to time without using the temperature sensor 20 with reference to Fig. 8. In this example, for a given time (for example, 30 minutes) after start of the heat retention, the heat retaining control is executed while giving priority to the state of a food; and, after passage of a given time (for example, 30 minutes), the heat retaining control is carried out while giving priority to the heat retaining time and energy saving.

As shown in Fig. 8, when the heat retention is started, firstly, in order to heat the food 11 and the interior of the heating chamber 12 in a short time up to a given temperature (65°C or higher), they are heated using microwaves generated by the magnetron 32 as well as using the upper heater 13 and convection heater 25. For example, the magnetron 32 is operated at 47W (specifically, it is on at 200W for 7 seconds and off for 23 seconds), the heater 13 is on for 7 seconds and is off for 23 seconds, and convection heater 25 is on for 23 seconds and off for 7 seconds; and, they are operated for two minutes respectively.

According to this control, the temperature in the vicinity of the food is raised using the upper heater 13 and convection heater 25 and the temperature of the interior of the food is raised using the microwaves up to a temperature of 50°C or higher, thereby preventing the bacteria of the food against multiplication.

When two minutes have passed, the magnetron 32 is operated in the same manner as ever, the upper heater 13 is operated on for 40 seconds and off for 80 seconds, and the convection heater 25 is turned off. At the same time, while the storage part heating part 18 is operated on for 30 seconds and off for 50 seconds, supply of 50 cc of water per minute is started as steam.

Thanks to this control, while maintaining the temperature in the vicinity of the food constant at a temperature of about 65°C in order to give priority to the heat retaining state of the food, the food can be prevented from drying.

When three minutes have passed since the heat retention started, the magnetron 32 is switched over to 30W (it is on for 7 seconds at 200W and off for 39 seconds) to reduce the output thereof. Other remaining conditions such as the operation of the heater 13 and the supply of the steam remain unchanged. This state continues for 20 minutes after the start of the heat retention and, when 20 minutes have passed, the magnetron 32 is caused to stop.

And, when 30 minutes have passed since the heat retention started, the storage part heating part 18 is switched such that it is on for 35 seconds and off for 485 seconds, and 1.25 cc of water per minute is supplied as steam. By the way, the heater 13 remains unchanged.

According to this control, for example, when a tank 15 of 600 cc is used, as the heat retaining time, there can be used time up to 3 hours and the power rate can be saved up to about 50% for 30 minutes from the start of the heat retention.

Next, description will be given below of heat retaining states (the temperature of the vicinity of the food, the state of the food, and the need for wrapping) with respect to the respective heating sources with reference to Fig. 9.

When keeping a food warm only by microwaves, the temperature of the food varies greatly depending on the quantity of the food; and, therefore, this heat retaining method is not so desirable. With regard to the state of the food, because the food dries depending on the quantity and time, this method is not so desirable. Also, a wrapping is indispensable and, without the wrapping, the food itself dries; and, therefore, this method is not desirable.

When keeping a food warm only by a heater, since the temperature of the interior of the heating chamber rises quickly but the temperature of the interior of the food does not rise quickly, this method is not so desirable. Also, when maintaining the food temperature at the heat retaining temperature, there is a fear that, as the temperature rises, the food dries; and, therefore, this method is not desirable. Further, as for use of a wrapping, depending on the temperature, use of the wrapping is impossible and, without the wrapping, the food dries; and, therefore, this method is not desirable.

When keeping a food warm only by steam, since it takes time to raise the temperature of the interior of the heating chamber, this method is not so desirable. As for the state of the food, this method can prevent the food from drying but there is a fear that the food can be watery. Also, the food may be wrapped but, even when the food is not wrapped, the food can be prevented from drying.

By the way, it takes time to raise the food temperature up to a temperature of 65°C or higher and, when steam is supplied in order to maintain the temperature of 65°C or higher, there is a fear that the humidity can be too much.

When keeping a food warm using microwaves and steam in combination, depending on the quantity of the food, the food temperature varies greatly; and, therefore, this method is not so desirable.

However, since the steam can prevent the food from drying, the state of the food is good. It is preferred to wrap the food but, even without wrapping, there is no fear that the food can dry. However, depending on the heat retaining time and the quantity of steam, there may be a fear that the food can dry.

Also, because the food temperature can be raised in a short time up to and maintained at a temperature of 50°C or higher by the microwaves, this method is advantageous from the viewpoint of hygiene.

When keeping a food warm using a heater and steam in combination, the temperature of the interior of the heating chamber can be raised quickly and the temperature of the vicinity of the food is good. As for the state of the food, because of the effect of the steam, there is little fear that the food can dry. It is preferred to use a wrapping but, even without the wrapping, there is little fear that the surface of the food can dry.

By the way, the temperature of the interior of the heating chamber can be quickly raised up to and maintained in the temperature range of 65° ~ 75°C by the heater and, therefore, this method is advantageous from the viewpoint of food hygiene.

When keeping a food warm using microwaves, a heater and steam in combination, the temperature of the interior of the heating chamber can be raised in a short time by the heater and also the food temperature can be raised from the inside of the food by the microwaves; and, therefore, this method is good. As for the state of the food, since the tendency of the food to dry depending on the quantity and time can be reduced by the steam; and, therefore, this method is good. It is preferred to use a wrapping. However, even with no use of the wrapping, there is little fear that the surface of the food can dry.

By the way, the food temperature can be raised up to and maintained at a temperature of 50°C or higher as well as the temperature of the interior of the heating chamber can be raised up to and maintained in the temperature range of 65° ~ 75°C in the shortest time by the microwaves and heater; and, therefore, this method is advantageous from the viewpoint of hygiene.

After a food is cooked, when the food is left as it is, there is a fear that bacteria can start to multiply.

Generally, the proper temperature range of the growth of the bacteria extends from about 20 ~ 50° and bacteria quick to multiply can reach in about ten minutes the number of cells that can cause food poisoning.

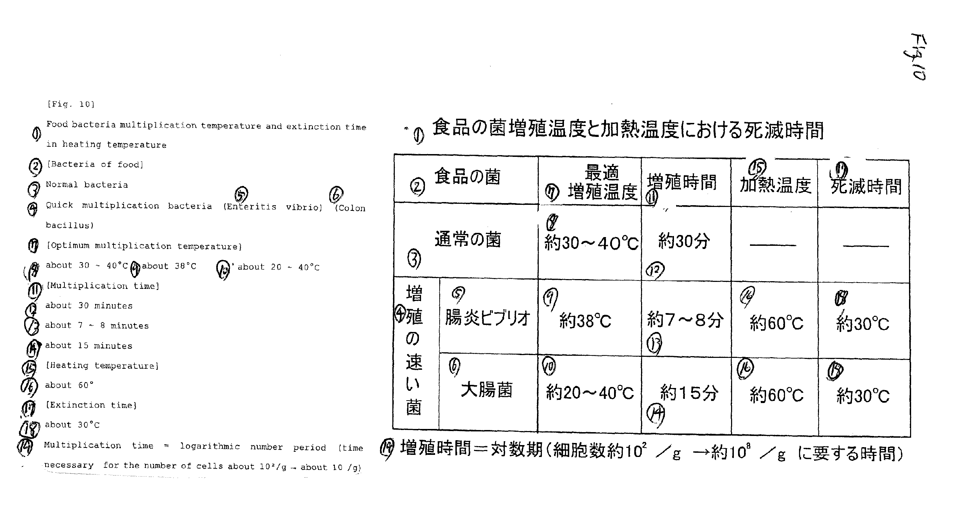

For example, Fig. 10 shows examples of such bacteria. Therefore, generally, when a food is left alone after it is cooked, the food is kept in an environment (cold storage, refrigeration) of 10°C or lower or in an environment (a hot or warm apparatus) of 65°C or higher, thereby preventing the bacteria from multiplying.

However, when a warm food is left alone in the environment of 10°C or lower, the food becomes cool and, when eating the food, it must be heated again. Also, when the food is left alone in the environment of 65°C or higher, the food is dehydrated and is not tasty.

In view of this, in order to not only keep a food warm at a proper temperature but also prevent the multiplication of bacteria, an environment for keeping the food warm is heated in a short time (within about 20 minutes) up to a temperature (generally, 65°C) higher than the proper temperature of growth of bacteria, and a proper amount of steam is supplied, thereby maintaining the environment at a given temperature.

As described above, the method for keeping a food warm using the microwaves, heater and steam in combination is considered most preferable from the viewpoint of the food heat retention and hygiene.

As has been described heretofore, according to the microwave oven 10 which is a cooking apparatus, the temperature of the interior of the heating chamber 12 can be maintained at a proper heat retention temperature and thus the food can be kept warm at a given temperature. Also, in this case, since a proper amount of steam is supplied, not only the heat from the heaters 13 and the like can be softened but also the supply of water can prevent the food from drying and thus from burning.

Also, while preventing the food from drying, the food temperature can be raised up to a temperature of 50° or higher in a short time and this temperature can be maintained for a given time. Therefore, the present microwave oven 10 is advantageous in food hygiene.

By the way, a cooking apparatus according to the invention is not limited to the above-mentioned embodiment but there are also possible other proper changes and modifications.

### <Industrial Applicability>

According to the invention, there can be solved a problem found in the conventional cooking apparatus that the surface of an object to be heated dries and burns, whereby the object to be heated can be maintained at a heat retaining temperature suitable for keeping it warm.

## Claims

1. A cooking apparatus capable of supplying steam to a heating chamber with an object to be heated stored therein, comprising:
heating chamber interior heating means, heating the interior of the heating chamber;
steam supply means, supplying steam into the heating chamber;
heating chamber temperature detect means, detecting the temperature of the interior of the heating chamber; and
a control part, controlling the heating chamber interior temperature detect means and the steam supply means;
wherein the control part, based on the temperature detected by the heating chamber interior temperature detect means, controls the heating chamber interior heating means and the steam supply means to thereby be able to maintain the heating chamber interior temperature at a given heat retaining temperature suitable for keeping the object to be heated warm.

2. The cooking apparatus as set forth in Claim 1, wherein, while measuring the temperature of the interior of the heating chamber or the temperature of the object to be heated, the control part controls the heating chamber interior heating means and the steam supply means to thereby keep the object to be heated warm.

3. The cooking apparatus as set forth in Claim 1, wherein, up to a given time, the control is executed while giving priority to the state of the object to be heated and, after then, the control is executed while giving priority to a heat retaining time.

4. The cooking apparatus as set forth in Claim 3, wherein, after passage of the given time, information is given using informing means.
